# EUROPÄISCHE PATENTSCHRIFT

(11) **EP 2 205 345 B1**
(45) Veröffentlichungstag und Bekanntmachung des Hinweises auf die Patenterteilung: **15.05.2013**
(21) Anmeldenummer: 08839941.5
(22) Anmeldetag: 07.10.2008
(51) Int. Cl.: B01F 3/04, B01F 5/06, B01D 53/94, F01N 3/28

(54) **STATISCHER MISCHER FÜR EINE ABGASANLAGE EINES BRENNKRAFTMASCHINENBETRIEBENEN FAHRZEUGS, INSBESONDERE KRAFTFAHRZEUGS**
STATIC MIXER FOR AN EXHAUST GAS SYSTEM OF AN INTERNAL COMBUSTION ENGINE-DRIVEN VEHICLE, IN PARTICULAR MOTOR VEHICLE
MÉLANGEUR STATIQUE POUR SYSTÈME D'ÉCHAPPEMENT D'UN VÉHICULE ENTRAÎNÉ PAR MOTEUR À COMBUSTION INTERNE, EN PARTICULIER D'UN VÉHICULE AUTOMOBILE

(30) Priorität: 09.10.2007 DE 102007048558
(43) Veröffentlichungstag der Anmeldung: 14.07.2010
(73) Patentinhaber: Audi AG, 85045 Ingolstadt (DE); Tenneco Emmission Control Europe, 67477 Edenkoben (DE)
(72) Erfinder: PETERS, Axel, 85354 Freising (DE); BUDER, Marko, 85049 Ingolstadt (DE); GERDON, Stefan, 76863 Hayna (DE); KOHRS, Stefan, 67433 Neustadt (DE); DOLL, Manfred, 67435 Neustadt (DE)
(74) Vertreter: Krah, Annette
(86) Internationale Anmeldenummer: PCT/EP2008/008436
(87) Internationale Veröffentlichungsnummer: WO 2009/049790

(56) Entgegenhaltungen:
- EP-A- 1 830 042
- WO-A-2008/061734
- WO-A-2008/104350
- WO-A-2008/135112
- DE-A1- 19 922 355
- DE-B3-102006 058 715
- US-A- 5 489 153
- US-A- 5 526 462

## Beschreibung

Die Erfindung betrifft einen statischen Mischer für eine Abgasanlage eines brennkraftmaschinenbetriebenen Fahrzeugs, insbesondere Kraftfahrzeugs, nach dem Oberbegriff des Anspruchs 1.

Es ist allgemein bekannt, dass in Verbindung mit Abgasreinigungsanlagen zur Reduzierung der Stickoxid-Emissionen die sogenannte selektive katalytische Reduktion (SCR) eingesetzt wird, bei der die NOx-Umwandlung in magerer Atmosphäre über speziell abgestimmte Katalysatoren erzielt wird. Dabei wird zur NOx-Reduktion in den Abgasstrom ein geeignetes Reduktionsmittel eingebracht, um Endprodukte wie N₂, CO₂ und H₂O zu erhalten. Als Reduktionsmittel werden in Verbindung mit aktiven SCR-Katalysatoren z. B. Ammoniak oder Harnstoff verwendet. Zur Vermischung des Reduktionsmittels mit dem Abgas wird üblicherweise ein statischer Mischer eingesetzt, mittels dem eine gewünschte Verteilung des Reduktionsmittels im Abgasstrom für eine effiziente Abgasreinigung erzielt werden soll.

Aus der US 5,489,153 ist bereits ein gattungsbildender statischer Mischer für einen Strömungskanal bekannt, der in dem Strömungskanal eine Vielzahl von sogenannten Auslenkelementen aufweist. Die Auslenkelemente sind hier reihenweise auf einem rechtwinkeligen Traggitter angeordnet. Mittels eines derartigen statischen Mischers soll die ankommende Strömung von den Auslenkelementen in unterschiedliche Richtungen abgelenkt werden, wobei die Auslenkelemente eine - bezogen auf die Hauptströmungsrichtung - Querströmung in den einzelnen Traggitteröffnungen erzeugen. Damit soll eine be sonders effektive Vermischung durch Verwirbelung, insbesondere durch die Ausbildung von Drehwirbeln erzielt werden. Problematisch in Verbindung mit einem derartigen eine rechtwinkelige Gitterstruktur aufweisenden statischen Mischer ist jedoch, dass es bei sehr hohen Abgastemperaturen und/oder bei Temperaturwechseln mit großem Gradienten zu Rissen und Zerstörungen im Traggitterbereich des Mischers kommen kann.

Aus der DE 199 22 355 A1 ist ein Katalysatorträgerkörper mit einer Vielzahl von durchgehenden Strömungspfaden für ein fluides Medium und sich in Längsrichtung der Strömungspfade erstreckenden Trägerelementen für ein Katalysatormaterial bekannt. Der Trägerkörper weist in Längsrichtung der Strömungspfade umströmbare Stege und Kanten auf, wobei die Strömungskanäle durch Wellblechlagen und Streckmetalllagen ausgebildet sein können. Die Streckmetalllagen können dabei Dehnungsbereiche ausbilden, die Längenveränderungen, zum Beispiel aufgrund von Temperaturschwankungen längs und quer zu den Stegen aufnehmen können.

Der Aufbau dieser Streckmetalllagen ist relativ aufwändig und sowohl fertigungs- bzw. herstellungstechnisch nur mit einem erheblichen Aufwand sowie unter Einkalkulierung eines erheblichen Ausschusses möglich.

Aus der EP 1 830 042 A2 ist es ferner bekannt, die einzelnen Zellen bzw. Kanäle des statischen Mischers durch mehrere parallele Lagen bzw. durch eine einzelne Lage, die mehrfach abgebogen ist, auszubilden.

Demgegenüber ist es Aufgabe der Erfindung, einen statischen Mischer für eine Abgasanlage eines brennkraftmaschinenbetriebenen Fahrzeugs, insbesondere eines Kraftfahrzeugs, zur Verfügung zu stellen, mittels dem auf baulich relativ einfache und funktionssichere Weise die Gefahr einer Mischerbeschädigung durch temperaturbedingte Dehnungen der Bauteile im statischen Mischerbereich zuverlässig reduziert werden kann.

Diese Aufgabe wird gelöst mit den Merkmalen des Patentanspruchs 1. Vorteilhafte Ausgestaltungen hierzu sind Gegenstand der darauf rückbezogenen Unteransprüche.

Gemäß dem Patentanspruch 1 ist erfindungsgemäß vorgesehen, dass wenigstens eine Halteleiste als Zwischen-Halteleiste zwischen zwei beabstandeten weiteren Halteleisten, die Befestigungs-Halteleisten ausbilden, angeordnet ist, wobei die Anbindung der wenigstens einen Zwischen-Halteleiste an wenigstens einer der Befestigungs-Halteleisten in einem Krümmungs- oder Kurvenbereich der zwischen-Halteleiste erfolgt.

Mit einer derartigen erfindungsgemäßen Lösung wird somit ein gewünschter gitterförmiger Mischer-Halteleistenbereich ausgebildet, an dem die unter einem vorgegebenen Winkel gegen die Mischerebene geneigten Strömungsleitelemente angebunden werden können. Durch die kurvenförmig gekrümmte Ausbildung der Halteleisten bzw. einzelner Halteleistenbereiche können dabei Mischer ausgebildet werden, mit der der elastische Dehnungsausgleich, insbesondere bei hohen Abgastemperaturen, und damit die Gefahr einer Beschädigung des statischen Mischers deutlich reduziert werden kann. Insbesondere durch die erfindungsgemäße Anbindung wenigstens einer Zwischen-Halteleiste in einem Krümmungs- oder Kurvenbereich wenigstens einer der Befestigungs-Halteleisten wird dabei eine besonders spannungsarme Anbindung der Halteleisten zur Verfügung gestellt, mittels der temperaturbedingte Dehnungen und Materialverformungen hervorragend aufgenommen und ausgeglichen werden können.

Insgesamt wird mit einer derartigen erfindungsgemäßen Lösung somit ein Mischer zur Verfügung gestellt, der auf baulich und herstellungstechnisch einfache Weise temperaturbedingte Spannungen durch Materialdehnungen aufnehmen und ausgleichen kann, wodurch Zerstörungen des Mischers vermieden werden, da die federelastischen Halteleistenbereiche die Dehnungen reversibel ausgleichen können.

Bevorzugt ist hierzu die wenigstens eine Halteleiste zur Ausbildung von federelastischen Bereichen in vorgegebenen Halteleistenbereichen gekrümmt ausgebildet, insbesondere die Krümmungsbereiche jeweils durch einen S-kurvenförmig gekrümmten Halteleistenbereich (S-Schlag) gebildet. Mit derartigen gekrümmten Halteleisten wird eine rechtwinklige Gitteranordnung, wie dies beim Stand der Technik der Fall ist, vorteilhaft vermieden. Wie erfinderseitige Versuche gezeigt haben, können insbesondere mit der kurvenförmig gekrümmten Ausbildung der Halteleisten bzw. einzelner Halteleistenbereiche Mischer ausgebildet werden, mit der der elastische Dehnungsausgleich, insbesondere bei hohen Abgastemperaturen, und damit die Gefahr einer Beschädigung des statischen Mischers deutlich reduziert werden kann.

Insbesondere vorteilhaft ist ein Aufbau, bei dem die Anbindung der wenigstens einen Zwischen-Halteleiste in einer dachförmigen oder hutförmigen Federausbauchung der wenigstens einen Befestigungs-Halteleiste erfolgt.

Ferner kann die wenigstens eine Zwischen-Halteleiste gemäß einer thermomechanisch festigkeitsoptimierten Ausführungsform mit beiden gegenüberliegenden Halteleisten-Endbereichen in einem Krümmungs- oder Kurvenbereich, insbesondere einer dach- oder hutförmigen Federausbauchung der beabstandeten Befestigungs-Halteleisten angebunden sein. Bevorzugt weist dabei der Krümmungs- oder Kurvenbereich, insbesondere die

Federausnehmung jeder der beiden Befestigungs-Halteleisten, an denen die wenigstens eine Zwischen-Halteleiste angebunden ist, einen vorgegebenen Spaltabstand zu einem Mischerring des statischen Mischers oder einer Abgaskanalwand auf.

Die Befestigungs-Halteleisten sind zudem hier bevorzugt als Gleichteile ausgebildet, was zur Reduzierung der Bauteilvielfalt und zur Einsparung von Kosten führt, was nachfolgend in Verbindung mit einem weiteren erfindungswesentlichen Aspekt noch eingehender erläutert wird.

Gemäß diesem Aspekt sind bevorzugt mehrere, insbesondere zwei hinsichtlich der Halteleistenausgestaltung unterschiedliche Halteleistengruppen vorgesehen, wobei wenigstens eine dieser Halteleistengruppen eine Mehrzahl von Halteleisten aufweist, die innerhalb der jeweiligen Halteleistengruppe als Gleichteile ausgebildet sind. Die Halteleisten der unterschiedlichen Halteleistengruppen können dann in einer vorgegebenen Konfiguration in der Mischerebene angeordnet werden. Besonders bevorzugt ist vorgesehen, dass jede der Halteleistengruppen eine Mehrzahl von innerhalb der jeweiligen Halteleistengruppe als Gleichteile ausgebildeten Halteleisten aufweist.

Mit einer derartigen Ausgestaltung des statischen Mischers lässt sich ein herstellungstechnisch und bauteiltechnisch einfach aufgebauter statischer Mischer realisieren, da durch die Ausbildung von Gleichteilen der Herstellungsaufwand vorteilhaft reduziert werden kann. Durch das Vorsehen von mehreren, insbesondere zwei unterschiedlichen Halteleistengruppen lässt sich zudem auf einfache Weise sicherstellen, dass unterschiedliche gewünschte Konfigurationen für einen statischen Mischer zur Verfügung gestellt werden können. Insbesondere können damit auf eine Weise solche Mischer konfiguriert werden, mit der der zuvor geschilderte elastische Dehnungsausgleich, insbesondere bei hohen Abgastemperaturen, und damit die Gefahr einer Beschädigung des statischen Mischers deutlich reduziert werden kann.

Gemäß einer bevorzugten konkreten Ausgestaltung weist eine erste Halteleistengruppe eine Mehrzahl von als Gleichteile ausgebildeten Halteleisten auf, die in Halteleistenlängsrichtung jeweils mehrere voneinander beabstandete einflüglige Leitflügel als Strömungsleitelemente aufweisen. Besonders bevorzugt ist hierbei vorgesehen, dass die Leitflügel allesamt auf der gleichen Mischerebenenseite angeordnet sind und damit von dieser Mischerebenenseite wegragen. Auf dieser Mischerebenseite ragen die Leitflügel jedoch abwechselnd in entgegengesetzte Richtungen, und zwar unter einem vorgegebenen Winkel gegen die Mischerebene geneigt. Die einflügeligen Leitflügel sind bevorzugt platten- und/oder schaufelförmig ausgebildet. Mit einer derartigen Mischergeometrie lassen sich besonders gute und effektive Mischergebnisse erzielen.

Gemäß einer konkreten Ausgestaltung sind die Halteleisten parallel und beabstandet zueinander in der Mischerebene gehaltert, so dass die einzelnen Leitflügel der Halteleisten so hintereinander liegen, dass diese in der Mischerebene mehrere Leitflügelreihen ausbilden und zwar, wie zuvor bereits erläutert bevorzugt ohne eine rechtwinklige Gitterstruktur der Halteleisten. Die einzelnen Leitflügel der Halteleisten liegen dabei bevorzugt so hintereinander, dass die einzelnen Leitflügelreihen abwechselnd in entgegengesetzte Richtungen weisen. Damit lassen sich hervorragende Mischergebnisse erzielen.

Eine für eine derartige konkrete Ausführungsform der ersten Halteleistengruppe geeignete Ausgestaltung der Halteleisten einer zweiten Halteleistengruppe sieht vor, dass die mehreren Halteleisten dieser zweiten Halteleistengruppe im Wesentlichen quer zu den Halteleisten der ersten Halteleistengruppe verlaufen, wobei diese Halteleisten der zweiten Halteleistengruppe bevorzugt jeweils eine solche Anzahl von einflügeligen Leitflügeln aus Strömungsleitelementen an solchen Positionen aufweisen, dass Leitflügel-Lücken in einem Mischerebenen-Randbereich in den durch die Leitflügel der Halteleisten der ersten Halteleistengruppe gebildeten Leitflügelreihen geschlossen werden können, d. h. die Leitflügel der Halteleisten der zweiten Halteleistengruppe somit Bestandteil der Leitflügelreihen bilden.

Die Festlegung der Halteleisten erfolgt bevorzugt mittels einer Punktschweißverbindung, und zwar entweder an einem Mischerring oder an einer Abgaskanalwand des Abgasstrangs.

Insbesondere für eine Vorfixierung bzw. Vormontage des Mischers können die Halteleisten gemäß einer besonders bevorzugten Ausgestaltung zudem in ihren Überkreuzungsbereichen durch eine Steckschlitzverbindung miteinander verbunden sein.

Ebenso können die Halteleisten mittels einer Steckschlitzverbindung oder einer anderen Rastfixierung an einem Mischerring vorfixierbar sein, damit diese dann z. B. durch Schweißpunkte angeheftet werden können.

Als bevorzugtes Material für einen derartigen statischen Mischer dient in üblicher Weise ein Metall- oder Blechmaterial.

Die Erfindung wird nachfolgend anhand einer Zeichnung näher erläutert.

Es zeigen
- Fig. 1: schematisch eine Draufsicht auf einen erfindungsgemäßen statischen Mischer,
- Fig. 2: eine Rückansicht des statischen Mischers gemäß Fig. 1.
- Fig. 3: schematisch eine Ausführung einer Halteleiste einer ersten Halteleistengruppe, und
- Fig. 4: schematisch eine Ausführung einer Halteleiste einer zweiten Halteleistengruppe,

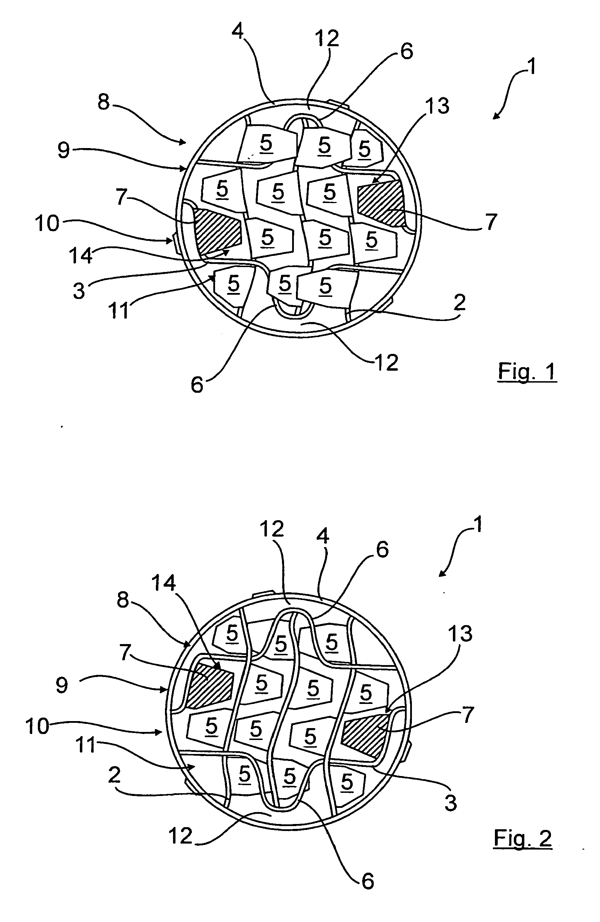

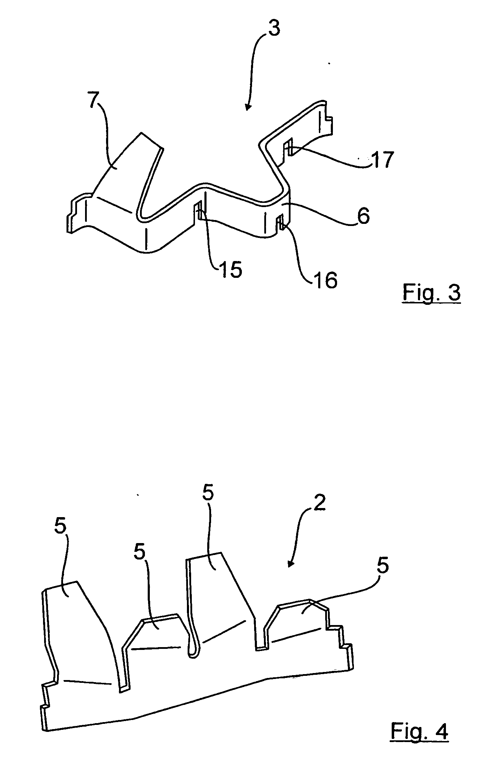

In Fig. 1 ist schematisch eine Draufsicht auf den erfindungsgemäßen statischen Mischer 1 gezeigt, der, wie dies insbesondere in Zusammenschau mit den Fig. 3 und 4 ersichtlich ist, aus drei als Gleichteile ausgebildeten Halteleisten 2 einer ersten Halteleistengruppe und aus zwei als Gleichteile ausgebildeten Halteleisten 3 einer zweiten Halteleistengruppe aufgebaut ist, die in einer noch näher zu beschreibenden Art und Weise in einem Mischerring 4 des statischen Mischers gehaltert sind.

Wie dies der Fig. 4 entnommen werden kann, weisen die Halteleisten 3 jeweils eine im Wesentlichen S-förmige Krümmung auf, wobei in Halteleistenlängsrichtung gesehen mehrere voneinander beabstandete einflüglige plattenartige Leitflügel 5 angeordnet sind. Diese Leitflügel 5 stehen jeweils von der gleichen Seite der Halteleisten 2 und damit im montierten Zustand, wie dies aus der Fig. 1 ersichtlich ist, von der gleichen Mischerebenenseite ab, wobei die einzelnen Leitflügel in eben die Halteleistenlängsrichtung gesehen abwechselnd in entgegengesetzte Richtung weisen und unter einem vorgegebenen Winkel gegen die Mischerebene geneigt sind.

Die Halteleisten 3 der zweiten Halteleistengruppe, die in Fig. 3 dargestellt sind, sind ebenfalls gekrümmt ausgebildet und weisen in etwa in einem mittleren Bereich - bezogen auf die Halteleistenlängsrichtung - eine hutförmige Ausbauchung 6 auf. An einem in der Bildebene der Fig. 3 linken Endbereich der Halteleiste 3 ist ferner ein plattenförmig ausgebildeter Leitflügel 7 angeordnet, der ebenfalls unter einem vorgegebenen Winkel geneigt ist.

Wie dies nunmehr insbesondere aus der Fig. 1 in Verbindung mit der Fig. 2 ersichtlich ist, werden die Halteleisten 2 der ersten Halteleistengruppe im montierten Zustand so voneinander beabstandet und im Wesentlichen parallel verlaufend ausgerichtet, dass die einzelnen Leitflügel 5 in der durch den Mischerring 4 gebildeten Mischerebene Leitflügelreihen 8, 9, 10 und 11 ausbilden, wobei die Leitflügel 5 der Halteleisten 2 jeder Leitflügelreihe 8, 9, 10, 11 jeweils hintereinander liegen und in eine gleiche Richtung weisend geneigt bzw. ausgerichtet sind.

Wie dies den Fig. 1 und 2 weiter entnommen werden kann, ergeben sich dadurch Leitflügelreihen 8, 9, 10, 11, die durch die besondere Ausgestaltung der Halteleisten 2 mitsamt den daran angeordneten und in entgegengesetzte Richtung weisenden Leitflügeln 5 ebenfalls abwechselnd in entgegengesetzte Richtungen weisen, und zwar dergestalt, dass die jeweils unmittelbar benachbarten Leitflügelreihen jeweils Leitflügel 5 aufweisen, die in eine entgegengesetzte Richtung weisen.

Dagegen werden die Halteleisten 3 (in der Fig. 1 und 2 mit dicken schwarzen Linien und schraffiertem Leitflügel dargestellt) der zweiten Halteleistengruppe im Wesentlichen quer zu den Halteleisten 2 der ersten Halteleistengruppe verlaufend im Mischerring 4 montiert, wobei die beiden Halteleisten 3 so gegeneinander versetzt und um 180° gedreht in der durch den Mischerring 4 gebildeten Mischerebene angeordnet sind, dass die Ausbauchungen 6 mit einem vorgegebenen Spaltabstand 12 vor dem Mischerring 4 enden. Wie dies den Fig. 1 und 2 weiter entnommen werden kann, gelangt durch eine derartige Anordnung der Halteleisten 3 deren Leitflügel 7 in die Leitflügel-Lücken 13, 14, die konstruktionsbedingt durch die Gestaltung der Halteleisten 2 mitsamt ihren Leitflügeln 5 ausgebildet werden, so dass die Leitflügel 7 der Halteleisten 3 sich "nahtlos" in die Leitflügelreihen 9, 10 einreihen und diese Leitflügelreihen komplettieren.

Wie dies den Fig. 1 und 2 weiter entnommen werden kann, wird die mittlere Halteleiste 3 mit den freien Enden im Bereich der Ausbauchungen 6 festgelegt, z. B. durch Verschweißen, während die freien Enden der restlichen Halteleisten 2, ebenso wie die freien Enden der Halteleisten 3 über z. B. Punktschweißverbindungen mit der Innenseite des Mischerrings 4 verbunden werden.

Wie dies den Fig. 3 und 4 weiter entnommen werden kann, sind zudem an den Halteleisten 3 Schlitzausnehmungen 15, 16 und 17 vorgesehen, die entsprechend zugeordnete Halteleistenbereiche der Halteleisten 2 aufnehmen und umgreifen, wodurch diese in einer Art Steckverbindung miteinander verbunden sind und z. B. auf einfache Weise vorfixiert bzw. vormontiert werden können. Außerdem ist dadurch sichergestellt, dass die Leitflügel 5, 7 der Halteleisten 2, 3 im montierten Zustand des Mischers 1 im Wesentlichen in einer gleichen Horizontalebene liegen.

## Patentansprüche

1. Statischer Mischer für eine Abgasanlage eines brennkraftmaschinenbetriebenen Fahrzeugs, mit einer Mehrzahl von die Strömung eines Abgasstromes beeinflussenden Strömungsleitelementen, die um einen vorgegebenen Winkel gegen die Mischerebene geneigt sind und mittels wenigstens einer Halteleiste (2, 3) im Abgaskanal gehaltert sind, wobei die wenigstens eine Halteleiste (2, 3) wenigstens in vorgegebenen Teilbereichen federelastisch ausgebildet und/oder federnd in der Mischerebene gelagert ist und wobei die wenigstens eine Halteleiste (2, 3) zur Ausbildung von federelastischen Bereichen in vorgegebenen Halteleistenbereichen gekrümmt ausgebildet ist, wobei mehrere in unterschiedliche Richtungen verlaufende Halteleisten (2, 3) vorgesehen sind, die so in der Mischerebene angeordnet sind, dass wenigstens eine der Halteleisten (2) mit wenigstens einem Befestigungsbereich an einer weiteren Halteleiste (3) festgelegt ist,
**dadurch gekennzeichnet, dass** wenigstens eine Halteleiste (2) als Zwischen-Halteleiste zwischen zwei beabstandeten weiteren Halteleisten (3) als Befestigungs-Halteleisten angeordnet ist, wobei
die Anbindung der wenigstens einen Zwischen-Halteleiste (2) an wenigstens einer der Befestigungs-Halteleisten (3) in einem Krümmungs- oder Kurvenbereich der zwischen-Halteleiste (2) erfolgt.

2. Statischer Mischer nach Anspruch 2, **dadurch gekennzeichnet, dass** die Krümmungsbereiche jeweils durch einen S-kurvenförmig gekrümmten Halteleistenbereich gebildet sind.

3. Statischer Mischer nach Anspruch 1 oder 2, **dadurch gekennzeichnet, dass** die Anbindung der wenigstens einen Zwischen-Halteleiste (2) in einer dach- oder hutförmigen Federausbauchung (6) der wenigstens einen Befestigungs-Halteleiste (3) erfolgt.

4. Statischer Mischer nach einem der Ansprüche 1 bis 3, **dadurch gekennzeichnet, dass** die wenigstens eine Zwischen-Halteleiste (2) mit beiden gegenüberliegenden Halteleisten-Endbereichen in einem Krümmungs- oder Kurvenbereich der beabstandeten und bevorzugt als Gleichteile ausgebildeten Befestigungs-Halteleisten (3) angebunden ist.

5. Statischer Mischer nach Anspruch 4, **dadurch gekennzeichnet, dass** der Krümmungs- oder Kurvenbereich jeder der beiden Befestigungs-Halteleisten (3), an denen die wenigstens eine Zwischen-Halteleiste (2) angebunden ist, einen vorgegebenen Spaltabstand zu einem Mischerring (4) des statischen Mischers (1) oder einer Abgaskanalwand aufweist.

6. Statischer Mischer nach einem der Ansprüche 1 bis 5, **dadurch gekennzeichnet, dass** mehrere hinsichtlich der Halteleistenausgestaltung unterschiedliche Halteleistengruppen vorgesehen sind, wobei wenigstens eine dieser Halteleistengruppen eine Mehrzahl von Halteleisten (2, 3) aufweist, die innerhalb der jeweiligen Halteleistengruppe als Gleichteile ausgebildet sind dergestalt, dass die Halteleisten (2, 3) der unterschiedlichen Halteleistengruppen in einer vorgegebenen Konfiguration in der Mischerebene angeordnet sind.

7. Statischer Mischer nach Anspruch 6, **dadurch gekennzeichnet, dass** jede der Halteleistengruppen eine Mehrzahl von innerhalb der jeweiligen Halteleistengruppe als Gleichteile ausgebildeten Halteleisten (2, 3) aufweist.

8. Statischer Mischer nach Anspruch 6 oder 7, **dadurch gekennzeichnet, dass** eine erste Halteleistengruppe eine Mehrzahl von als Gleichteile ausgebildeten Halteleisten (2) aufweist, die in Halteleistenlängsrichtung jeweils mehrere voneinander beabstandete einflügelige Leitflügel (5) als Strömungsleitelemente aufweisen.

9. Statischer Mischer nach Anspruch 8, **dadurch gekennzeichnet, dass** die Leitflügel (5) allesamt auf der gleichen Mischerebenenseite angeordnet sind und damit von dieser wegragen, auf dieser Mischerebenenseite jedoch in Halteleistenlängsrichtung gesehen abwechselnd in eine entgegengesetzte Richtung weisen und unter einem vorgegebenen Winkel gegen die Mischerebene geneigt sind.

10. Statischer Mischer nach Anspruch 8 oder 9, **dadurch gekennzeichnet, dass** die Halteleisten (2) parallel und beabstandet zueinander in der Mischerebene gehaltert sind, wobei die einzelnen Leitflügel (5) der Halteleisten (2) so hintereinander liegen, dass diese in der Mischerebene mehrere Leitflügelreihen (8, 9, 10, 11) ausbilden.

11. Statischer Mischer nach Anspruch 9 oder 10, **dadurch gekennzeichnet, dass** die einzelnen Leitflügel (5) der Halteleisten (2) so hintereinander liegen, dass die Leitflügel der benachbarten Leitflügelreihen (8, 9, 10, 11) abwechselnd in entgegengesetzte Richtungen weisen.

12. Statischer Mischer nach Anspruch 10 oder 11, **dadurch gekennzeichnet, dass** eine zweite Halteleistengruppe eine Mehrzahlvon als Gleichteile ausgebildeten Halteleisten (3) aufweist, die quer zu den Halteleisten (2) der ersten Halteleistengruppe verlaufen und die jeweils eine solche Anzahl von einflügeligen Leitflügeln (7) als Strömungsleitelemente aufweisen, wie Leitflügel-Lücken (13, 14) in einem Mischerebenen-randbereich in den durch die Leitflügel (7) der Halteleisten (2) der ersten Halteleistengruppe gebildeten Leitflügelreihen (9, 10) vorhanden sind, wobei diese Leitflügel (7) die Leitflügel-Lücken (13, 14) schließen und Bestandteil der Leitflügelreihe (9, 10) bilden.

13. Statischer Mischer nach einem der Ansprüche 1 bis 12, **dadurch gekennzeichnet, dass** die restlichen, nicht im Bereich der Ausbuchtung (6) festgelegten Halteleisten (2, 3) an einem Mischerring (4) oder einer Abgaskanalwand festgelegt sind.

14. Statischer Mischer nach einem der Ansprüche 1 bis 13, **dadurch gekennzeichnet, dass** wenigstens ein Teil der Halteleisten (2, 3) einander in der Mischerebene überkreuzen und im Überkreuzungsbereich durch eine Steckschlitzverbindung miteinander verbunden sind.

15. Statischer Mischer nach einem der Ansprüche 1 bis 14, **dadurch gekennzeichnet, dass** wenigstens ein Teil der die Halteleisten (2, 3) mittels einer Steckschlitzverbindung an einem Mischerring (4) vorfixiert ist.

16. Statischer Mischer nach einem der Ansprüche 1 bis 15, **dadurch gekennzeichnet, dass** die Halteleisten (2, 3) in einem Mischerring (4) gehalten sind, der mit einer Abgaskanalwand verbunden ist.

17. Statischer Mischer nach einem der Ansprüche 1 bis 16, **dadurch gekennzeichnet, dass** die Halteleisten (2, 3) sowie ein diese haltender Mischerring (4) aus einem Metallmaterial hergestellt ist.

## Claims

1. Static mixer for an exhaust gas system of an internal-combustion-engine-driven vehicle, comprising a plurality of flow guide elements which influence the flow of an exhaust gas stream and are inclined at a predetermined angle relative to the mixer plane and are held in the exhaust gas channel by means of at least one retaining strip (2, 3), the at least one retaining strip (2,3) being resiliently formed at least in predetermined partial regions and/or being spring-mounted in the plane of the mixer, and the at least one retaining strip (2, 3) being formed in a curved manner to form resilient regions in predetermined regions of the retaining strip, a plurality of retaining strips (2, 3) extending in different directions are provided and are arranged in the mixer plane such that at least one of the retaining strips (2, 3) is fixed by means of at least one attachment region on another retaining strip (3), **characterised in that** at least one retaining strip (2) is arranged as an intermediate retaining strip between two further spaced retaining strips (3) as attachment retaining strips, the at least one intermediate retaining strip (2) being connected to at least one of the attachment retaining strips (3) in a region of curvature or bending of the intermediate retaining strip (2).

2. Static mixer according to claim 2, **characterised in that** the regions of curvature are each formed by a retaining strip region which is curved in an S-shape.

3. Static mixer according to either claim 1 or claim 2, **characterised in that** the at least one intermediate retaining strip (2) is connected in a roof-shaped or hat-shaped spring convexity (6) of the at least one attachment retaining strip (3).

4. Static mixer according to any of claims 1 to 3, **characterised in that** the at least one intermediate retaining strip (2) is connected to the two opposite retaining strip end regions in a region of curvature or bending of the spaced attachment retaining strips (3) which are preferably formed as identical parts.

5. Static mixer according to claim 4, **characterised in that** the region of curvature or bending of each of the two attachment retaining strips (3) to which the at least one intermediate retaining strip (2) is connected has a predetermined gap distance from a mixer ring (4) of the static mixer (1) or an exhaust gas channel wall.

6. Static mixer according to any of claims 1 to 5, **characterised in that** a plurality of groups of retaining strips which differ with respect to the configuration of the retaining strips are provided, at least one of said groups of retaining strips comprising a plurality of retaining strips (2, 3) which are formed as identical parts within the respective groups of retaining strips such that the retaining strips (2, 3) of the different groups of retaining strips are arranged in a predetermined configuration in the mixer plane.

7. Static mixer according to claim 6, **characterised in that** each of the groups of retaining strips comprises a plurality of retaining strips (2, 3) which are formed as identical parts within the respective groups of retaining strips.

8. Static mixer according to either claim 6 or claim 7, **characterised in that** a first group of retaining strips comprises a plurality of retaining strips (2) which are formed as identical parts and have a plurality of single-vane guide vanes (5) which are spaced apart from one another as flow guide elements in the longitudinal direction of the retaining strips.

9. Static mixer according to claim 8, **characterised in that** the guide vanes (5) are all arranged on the same side of the mixer plane and thus project away therefrom, but on this side of the mixer plane, viewed in the longitudinal direction of the retaining strips, point alternately in an opposite direction and are inclined at a predetermined angle relative to the mixer plane.

10. Static mixer according to either claim 8 or claim 9, **characterised in that** the retaining strips (2) are held parallel to and spaced apart from one another in the mixer plane, the individual guide vanes (5) of the retaining strips (2) being positioned behind one another such that they form a plurality of rows (8, 9, 10, 11) of guide vanes in the mixer plane.

11. Static mixer according to either claim 9 or claim 10, **characterised in that** the individual guide vanes (5) of the retaining strips (2) are positioned behind one another such that the guide vanes of the adjacent rows (8, 9, 10, 11) of guide vanes point alternately in opposite directions.

12. Static mixer according to either claim 10 or claim 11, **characterised in that** a second group of retaining strips comprises a plurality of retaining strips (3) which are formed as identical parts, extend transverse to the retaining strips (2) of the first group of retaining strips and each have the same number of single-vane guide vanes (7) acting as flow guide elements as there are guide vane gaps (13, 14) in an edge region of the mixer plane in the rows (9, 10) of guide vanes which are formed by the guide vanes (7) of the retaining strips (2) of the first group of retaining strips, said guide vanes (7) closing the guide vane gaps (13, 14) and forming a component of the row (9, 10) of guide vanes.

13. Static mixer according to any of claims 1 to 12, **characterised in that** the remaining retaining strips (2, 3) which are not attached in the region of the convexity (6) are attached to a mixer ring (4) or an exhaust gas channel wall.

14. Static mixer according to any of claims 1 to 13, **characterised in that** at least some of the retaining strips (2, 3) cross over in the mixer plane and can be interconnected in the crossover region by means of an insertion slot connection.

15. Static mixer according to any of claims 1 to 14, **characterised in that** at least some of the retaining strips (2, 3) can be pre-fixed by means of an insertion slot connection on a mixer ring (4).

16. Static mixer according to any of claims 1 to 15, **characterised in that** the retaining strips (2, 3) are held in a mixer ring (4) which is connected to an exhaust gas channel wall.

17. Static mixer according to any of claims 1 to 16, **characterised in that** the retaining strips (2, 3) and a mixer ring (4) which holds said strips are made from a metal material.

## Revendications

1. Mélangeur statique pour un système de gaz d'échappement d'un véhicule entraîné par moteur à combustion interne, avec une pluralité d'éléments de guidage de flux qui agissent sur l'écoulement d'un flux de gaz d'échappement et qui sont inclinés d'un angle prédéfini par rapport au plan du mélangeur et qui sont retenus dans le canal d'échappement au moyen d'au moins une barre de retenue (2, 3), la barre de retenue (2, 3) au moins au nombre de un étant réalisée de façon élastique à la manière d'un ressort dans au moins des zones partielles prédéfinies et/ou étant supportée à la façon d'un ressort dans le plan du mélangeur, et la barre de retenue (2, 3) au moins au nombre de un étant réalisée de façon courbe dans des zones de barre de retenue prédéfinies pour la constitution de zones élastiques à la manière d'un ressort, plusieurs barres de retenue (2, 3) placées dans différentes directions étant prévues, qui sont disposées dans le plan du mélangeur de telle sorte qu'au moins une des barres de retenue (2) est fixée sur une autre barre de retenue (3) avec au moins une zone de fixation,
**caractérisé en ce qu'**au moins une barre de retenue (2) est disposée en tant que barre de retenue intermédiaire entre deux autres barres de retenue (3) espacées, en tant que barres de retenue de fixation,
l'attachement de la barre de retenue intermédiaire (2) au moins au nombre de un sur au moins une des barres de retenue de fixation (3) s'effectuant dans une zone de courbure ou d'incurvation de la barre de retenue intermédiaire (2).

2. Mélangeur statique selon la revendication 2, **caractérisé en ce que** les zones de courbure sont formées respectivement par une zone de barre de retenue courbée en forme de courbe en S.

3. Mélangeur statique selon la revendication 1 ou 2, **caractérisé en ce que** l'attachement de la barre de retenue intermédiaire (2) au moins au nombre de un s'effectue dans un renflement à ressort (6), en forme de toit ou de chapeau, de la barre de retenue de fixation (3) au moins au nombre de un.

4. Mélangeur statique selon une des revendications 1 à 3, **caractérisé en ce que** la barre de retenue intermédiaire (2) au moins au nombre de un est attachée aux deux zones extrêmes de barre de retenue opposées dans une zone de courbure ou d'incurvation des barres de retenue de fixation (3) espacées et réalisées de préférence en tant que parties identiques.

5. Mélangeur statique selon la revendication 4, **caractérisé en ce que** la zone de courbure ou d'incurvation de chacune des deux barres de retenue de fixation (3) auxquelles est attachée la barre de retenue intermédiaire (2) au moins au nombre de un présente un interstice prédéfini par rapport à une bague de mélangeur (4) du mélangeur statique (1) ou par rapport à une paroi du canal d'échappement.

6. Mélangeur statique selon une des revendications 1 à 5, **caractérisé en ce qu'**il est prévu plusieurs groupes de barres de retenue qui diffèrent en matière de configuration de barre de retenue, au moins un de ces groupes de barres de retenue présentant une pluralité de barres de retenue (2, 3) qui sont réalisées en tant que parties identiques à l'intérieur des groupes de barres de retenue respectifs de telle sorte que les barres de retenue (2, 3) des différents groupes de barres de retenue sont disposées dans une configuration prédéfinie dans le plan du mélangeur.

7. Mélangeur statique selon la revendication 6, **caractérisé en ce que** chacun des groupes de barres de retenue présente une pluralité de barres de retenue (2, 3) réalisés en tant que parties identiques à l'intérieur des groupes de barres de retenue respectifs.

8. Mélangeur statique selon la revendication 6 ou 7, **caractérisé en ce qu'**un premier groupe de barres de retenue présente une pluralité de barres de retenue (2) qui sont réalisées en tant que parties identiques et qui présentent, dans la direction longitudinale de barre de retenue, respectivement plusieurs pales de guidage (5) à paie unique espacées les unes des autres en tant qu'éléments de guidage de flux.

9. Mélangeur statique selon la revendication 8, **caractérisé en ce que** les pales de guidage (5) sont toutes disposées sur le même côté de plan du mélangeur et dépassent ainsi de celui-ci, mais sont cependant dirigées dans une direction opposée de façon alternée sur ce côté de plan du mélangeur, vu dans la direction longitudinale de barre de retenue, et sont inclinées d'un angle prédéfini par rapport au plan du mélangeur.

10. Mélangeur statique selon la revendication 8 ou 9, **caractérisé en ce que** les barres de retenue (2) sont retenues parallèlement et à distance les unes des autres dans le plan du mélangeur, les différentes pales de guidage (5) des barres de retenue (2) étant placées les unes derrière les autres de telle sorte qu'elles forment dans le plan du mélangeur plusieurs rangées de pales de guidage (8, 9, 10, 11).

11. Mélangeur statique selon la revendication 9 ou 10, **caractérisé en ce que** les différentes pales de guidage (5) des barres de retenue (2) sont placées les unes derrière les autres de telle sorte que les pales de guidage des rangées de pales de guidage (8, 9, 10, 11) voisines sont dirigées dans des directions opposées de façon alternée.

12. Mélangeur statique selon la revendication 10 ou 11, **caractérisé en ce qu'**un deuxième groupe de barres de retenue présente une pluralité de barres de retenue (3) réalisées en tant que parties identiques qui sont placées transversalement aux barres de retenue (2) du premier groupe de barres de retenue et qui présentent respectivement autant de pales de guidage (7) à pale unique en tant qu'éléments de guidage de flux qu'il y a d'espaces vides entre pales de guidage (13,14) dans une zone marginale de plan du mélangeur dans les rangées de pales de guidage (9, 10) formées par les pales de guidage (7) des barres de retenue (2) du premier groupe de barres de retenue, ces pales de guidage (7) fermant les espaces vides entre pales de guidage (13,14) et faisant partie de la rangée de pales de guidage (9, 10).

13. Mélangeur statique selon une des revendications 1 à 12, **caractérisé en ce que** les barres de retenue (2, 3) restantes qui ne sont pas fixées dans la zone du renflement (6) sont fixées sur une bague de mélangeur (4) ou une paroi de canal d'échappement.

14. Mélangeur statique selon une des revendications 1 à 13, **caractérisé en ce qu'**au moins une partie des barres de retenue (2, 3) se croisent dans le plan du mélangeur et sont raccordées les unes aux autres dans la zone de croisement par un raccordement par fente d'insertion.

15. Mélangeur statique selon une des revendications 1 à 14, **caractérisé en ce qu'**au moins une partie des barres de retenue (2, 3) est préfixée au moyen d'un raccordement par fente d'insertion sur une bague de mélangeur (4).

16. Mélangeur statique selon une des revendications 1 à 15, **caractérisé en ce que** les barres de retenue (2, 3) sont retenues dans une bague de mélangeur (4) qui est raccordée à une paroi de canal d'échappement.

17. Mélangeur statique selon une des revendications 1 à 16, **caractérisé en ce que** les barres de retenue (2, 3) ainsi qu'une bague de mélangeur (4) qui les retient sont fabriquées dans un matériau métallique.
